(19) **Europäisches Patentamt European Patent Office Office européen des brevets**

(11) **EP 2 422 109 B1**

(12) **EUROPEAN PATENT SPECIFICATION**

(45) Date of publication and mention
of the grant of the patent:
**06.11.2013 Bulletin 2013/45**

(21) Application number: **10717596.0**

(22) Date of filing: **22.04.2010**

(51) Int Cl.:
*F16F 9/34* *(2006.01)*     *F16F 9/348* *(2006.01)*

(86) International application number:
**PCT/EP2010/055344**

(87) International publication number:
**WO 2010/122102 (28.10.2010 Gazette 2010/43)**

(54) **PRESSURE REGULATOR FOR SHOCK ABSORBER**

DRUCKREGLER FÜR EINEN STOSSDÄMPFER

RÉGULATEUR DE PRESSION POUR AMORTISSEUR DE CHOC

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **23.04.2009 SE 0900543**

(43) Date of publication of application:
**29.02.2012 Bulletin 2012/09**

(73) Proprietor: **ÖHLINS RACING AB**
**194 27 Upplands Väsby (SE)**

(72) Inventors:
• **EWERS, Benny**
  **S-57436 Vetlanda (SE)**

• **MALMBORG, Håkan**
  **S-562 31 Norrahammar (SE)**
• **SÖNSTERÖD, Lars**
  **S-518 33 Sandaren (SE)**

(74) Representative: **Hansson, Anders Max**
**Awapatent AB**
**P.O. Box 45086**
**104 30 Stockholm (SE)**

(56) References cited:
**EP-A2- 0 508 466      EP-A2- 0 942 195
WO-A1-2006/135319   WO-A1-2009/051554
WO-A1-2009/157841   DE-A1- 4 404 835
DE-B- 1 249 100       DE-B- 1 264 272
DE-U- 7 000 825       GB-A- 1 547 193**

## Description

### Technical field

The invention concerns a pressure regulator with soft opening designed to determine the pressure in a flow of damping medium between the damping chambers of a shock absorber.

### Background of the invention

In the field of shock absorber valve design it is a problem to create a pressure regulator that opens and controls the pressure and thereby also changes the nature of the damping with a controlled and soft motion as the shock absorber's piston moves in its damping medium. Regulating the pressure in the flow of damping medium in the shock absorber depends on the pressure created by the speed of movement of the piston. Pressure regulators in shock absorbers are usually provided with a movable adjustment part, such as a washer or a cone that acts against a seat part. The pressure control is achieved by an equilibrium of forces on the movable adjustment part between a regulator force and supplemental opposing forces, such as one or more of: spring force, flow force, valve damping force, friction force or pilot pressure force. When the piston of the shock absorber moves at such speed that the regulator forces become greater than the opposing forces, the movable adjustment part is forced to open with a certain stroke. The stroke is a function of the flow produced by the pressure acting on the regulator's regulating area.

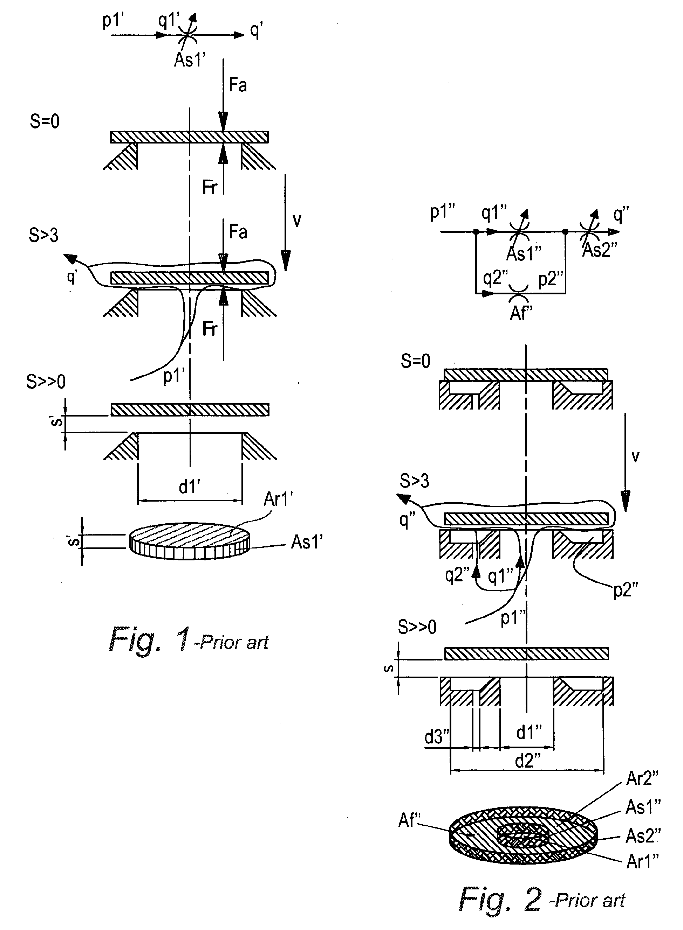

In the most simple form of a pressure regulator (Fig. 1), where a valve member in the form of a plane washer, cone, or the like rests against a seat, the regulator has a regulating area dependent only on one diameter d1', defined as the area subjected to the regulator pressure. Thus, the regulator force can be defined as the regulator pressure times the regulator area. The flow moves past the washer and is throttled by curtain areas As1', defined by the stroke s' and the diameter d1'. This variant of pressure regulator thus opens at a regulator force which is constant and determined by the regulator area. This means that the opening is abrupt at a certain pressure difference across the washer, determined by the regulator force Fr and the opposing forces, which can be a total opposing force Fa, created by either or all of the spring forces Fs, pilot forces Fp, and other flow and friction forces Fq.

The applicant in previously designed pressure regulators, published in patent EP0942195 and schematically described by Fig. 2, solved the problem of the abrupt pressure increase by introducing two serial, stroke-variable, first and second throttles with a first d1" and a second diameter d2" and a fixed third throttle arranged in parallel with the first throttle, having a certain third diameter d3". The placements of these throttles produce regulator areas Ar1", Ar2" on which two different regulator pressures P1", P2" act. The first regulator area Ar1" on which the main pressure P1" acts is determined by the diameter d1" and the second regulator area Ar2" on which an intermediate pressure P2" acts is determined by the difference between the diameters d2" and d1". The product of the respective regulator area and regulator pressure is the opening regulator force Fr.

The flow resistance RS1", RS2" through the first and second throttle is determined by the respective throttle's curtain area As1", As2" times a flow coefficient Kq". Thus, the size of the first and second curtain areas As1", As2" is determined by the diameters of the throttles d1", d2" times the valve stroke s and pi. Since the third throttle is fixed and not dependent on the stroke, the flow through the third throttle is determined only by its area Af", which is determined by the third diameter d3" by the formula $Af"=pi/4*d3"^2$. The parallel coupling of the first and the third throttle means that the flow resistance for the particular throttle can be added and designated the first flow resistance RS1"+Rf". The series coupling between the second throttle with a second flow resistance Rs2" and the parallel-coupled throttles with the first flow resistance RS1"+Rf" brings about a multiplication of the resistance. Thus, the total throttle resistance can be described as: $R"=(Rs1"+Rf")*Rs2"/((Rs1"+Rf")^2+Rs2"^2)^{0.5}$

Thus, the parallel coupling of the first and the third throttle's curtain areas/areas As1" and Af" means that the flow resistance at the two parallel-coupled throttles is RS1"+Rf". The same flow q" flows through these parallel-coupled throttles as through the second throttle As2". This means that the pressure drop due to the first flow resistance Rs1"+Rf" is p1"- p2" and the pressure drop due to the second flow resistance Rs2" is p2".

At low flow/stroke - that is, when the stroke s is zero or near zero - p1" is equal to p2" and with increasing flow/stroke the pressure p2" decreases in relation to p1". The decrease occurs because the flow resistance Rs1"+Rf" becomes more dominant as compared to Rs2" in its dependency on the stroke s. This means that the valve both opens and closes with a soft motion, as the opening and closing action holds down the pressure at the start of the stroke and then produces increasing pressure.

But this soft opening solution has drawbacks, such as: the geometry is hard to vary, it is tolerance-sensitive and above all, it only works for flow direction from the inside and out, that is, it precludes a dual-action function.

This patent application thus describes a shock absorber valve/pressure regulator with soft opening by a new design not having these drawbacks and, what is more, one that is susceptible to being used in a number of different applications.

**Object of the invention**

The present invention concerns a pressure regulator designed for use in a shock absorber valve. The regulator is supposed to open with a soft movement and at the same time it should be easily adapted to different applications.

The invention also involves creating a pressure regulator with a robust design that is relatively insensitive to tolerances, yet also affords greater design latitude, e.g., when a dual-action function is desired.

Moreover, the invention proposes to create a pressure regulator that is simple and economical to fabricate, install and adjust.

**Summary of the invention**

The pressure regulator of the invention is designed to adjust the pressure of a total flow of damping medium in a shock absorber valve between an upstream and a downstream volume where a first and a third pressure prevail. The pressure regulator comprises a first valve member which moves axially with a stroke in relation to a seat part with a first side comprising at least a first and a second seat. When the valve member moves with an axial stroke in relation to the seat part, a flow opening that varies with the stroke is created between the parts which is arranged to throttle the total flow of damping medium between the upstream and downstream volumes. The invention is characterised in that the seat part comprises at least two parallel first and second throttles whose throttling ability is determined by the configuration of the seats. The seat part also comprises a fixed third throttle arranged in series with the other throttles. The first and the second throttles vary with the stroke so that a first flow of damping medium goes through the first throttle and a second flow of damping medium goes through the second and the third throttle, where the relation between the first and the second flow of damping medium increases with increased stroke.

What distinguishes this soft opening solution from the prior art is that the different throttles are arranged in a different sequence, which means advantages in the form of an almost unlimited freedom in regard to the geometry of the desired soft opening. The new geometry can handle all flow directions and thus can also be made dual-action.

In a first embodiment of the pressure regulator, the first and the second throttles are defined by a first and a second seat diameter. This seat diameter is equivalent to the respective throttle's circumference, that is, the throttles do not need to be circular, but in theory can have any geometrical shape.

The first and second throttle can, as described, vary with the stroke in that their curtain areas dependent on the throttle diameter and stroke increase and let through a greater flow of damping medium when the stroke increases. At the same time, the third fixed serially arranged throttle ensures that the second flow of damping medium is throttled more than the first flow of damping medium, since the second flow of damping medium is forced through two throttles.

In a second embodiment of the invention, the first side of the seat part has cut-outs arranged inside the circumference of the first and the second seat. These cut-outs create first and second volumes arranged in the seat part. The damping medium located in the volumes receives a certain pressure on account of the flow, which is determined by the size of the throttles.

The third throttle can be configured as a hole with a third diameter which is arranged in the seat part. The hole then creates a flow opening between the upstream volume and the second volume. The third throttle can also be configured as a groove with a width and a depth that extends between the first and the second volume. In both of these configurations of the third throttle, it is arranged in series with the second throttle, which means that the second flow of damping medium is throttled more than the first flow of damping medium.

The first and the second volumes can also be said to be arranged as a first throttling unit, which is repeated at least once at the first side of the seat part. If at least two throttling units are arranged at the first side of the seat part, they can be placed symmetrically on the seat part. The flow between the damping chambers then creates an even pressure on the valve member, which lifts in controlled manner and basically parallel with the seat part. The throttling units can also be placed asymmetrically on the seat part when a certain angle is desired at the valve member when it lifts from the seat part. With an angle at the valve member, the pressure in the flow of damping medium can be further adjusted.

In a third embodiment, the seat part also has at the second side, opposite the first side, one or more second throttling units. Thus, the seat part has throttling units at the side pointing both in and against the direction of movement. The configuration of the seat part means that damping medium can flow through the seat part in both directions with basically the same pressure adjustment, that is, it has a soft-opening quality in both directions of flow.

In a further embodiment, the pressure regulator is designed to adjust the total flow of damping medium between a first and a second damping chamber, separated by a dividing part. The dividing part can be a piston, an arm, or the like, which moves with a speed determined by the shape of the surroundings into a damping unit, such as a shock absorber, front fork, or steering damper. The damping medium is then arranged so that it can flow through the pressure regulator via the first throttling units in a direction from the first to the second damping chamber and also in a direction from the second to the first damping chamber through the second throttling units. The pressure regulator can be placed in an external unit outside the damper body or arranged to be mounted directly in the dividing part of the shock absorber.

The invention is described more closely below, with reference to the accompanying drawings.

**List of figures**

Fig. 1 shows a first known variant of a simple pressure regulator.

Fig. 2 shows a second known variant of a soft-opening pressure regulator.

Fig. 3a is a schematic diagram of the flow through the pressure regulator according to an embodiment of the invention.

Fig. 3b shows the pressure regulator according to an embodiment of the invention in cutaway view for three different sizes of the valve member's stroke.

Fig. 3c shows an alternative embodiment of the third throttle.

Fig. 3d illustrates the flows of damping medium arising at a pressure regulator according to an embodiment of the invention, in a lifted position of the seat part.

Fig. 4 shows a first embodiment of the invention as a pressure regulator in the form of a check valve.

Fig. 5 shows an example of a pilot-control valve with the pressure regulator according to an embodiment of the invention.

Fig. 6a-e show alternative embodiments of the seat part.

Figure 7 shows a dual-action pilot-control shock absorber valve with a pressure regulator where the flow is allowed in both the compression and the rebound direction.

Fig. 8a-b shows a side view of part of the piston unit with the parts that are active during a compression and a rebound stroke.

Fig. 9 shows a pilot-controlled shock absorber valve including a pressure regulator according to an embodiment of the invention.

Fig. 10a and 10b are schematic diagrams of a shock absorber with a pilot-control shock absorber valve and how the damping medium flows during a rebound and a compression stroke.

Fig. 11 shows an alternative embodiment of the seat part.

Fig. 12 shows a pilot-controlled shock absorber including a pressure regulator according to an embodiment of the invention.

Fig. 13 is a graphical representation of results from a numerical simulation of the pressure p1 as a function of the flow q in a pressure regulator according to an embodiment of the invention.

**Detailed description of the invention**

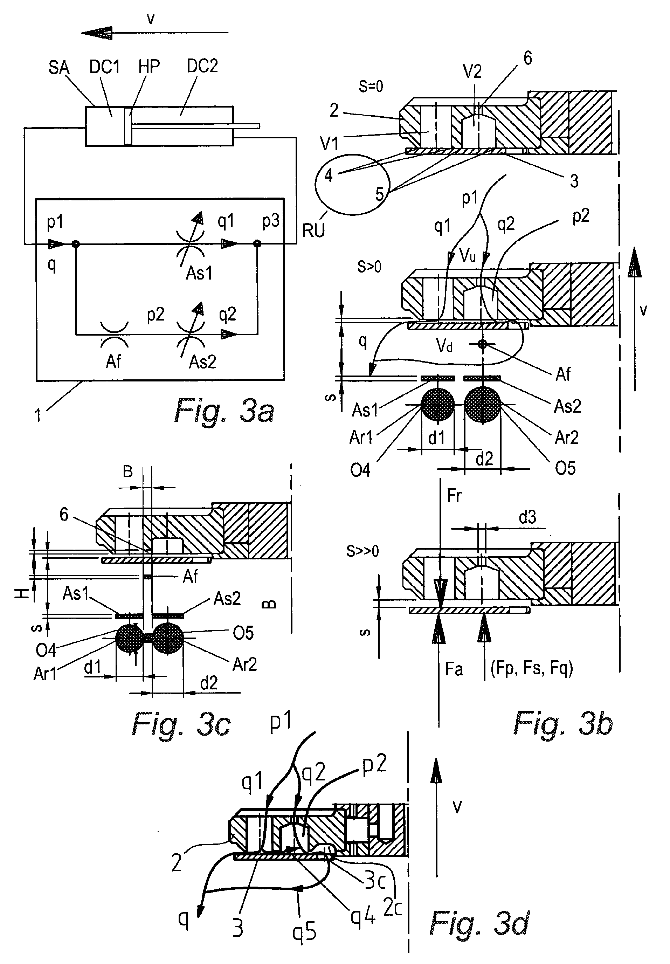

Figure 3a shows a schematic diagram of the flow through the pressure regulator according to an embodiment of the invention. The pressure regulator 1 is placed in a flow pathway q between the damping chambers DC1, DC2 of a shock absorber, separated by a dividing part HP. The application is not limited to shock absorbers that perform a telescopic movement, but can also cover, for example, rotational dampers. The flow q between the damping chambers DC1, DC2 can occur either through the dividing part HP or through channels arranged outside the respective chambers.

When the piston of the shock absorber moves at speed v, the pressure regulator opens and a flow of damping medium q can move in a first flow q1 across a first throttle 4a with a first stroke-dependent curtain area As 1 and in a second flow q2 across a second and a third throttle 5a, 6a with a stroke-dependent curtain area As2 and a fixed area Af which does not interact with the stroke. The definitions of curtain area can be seen in Fig. 3b. A first pressure p1 acts upstream of the throttles in the upstream volume $V_u$ and a third pressure p3 acts in the volume $V_d$ situated downstream from the throttles. Between the third 6a and the second throttle 5a, the second pressure p2 is active. The first and the second throttle 4a, 5a are parallel to each other and are variable with a stroke. The third throttle 6a is fixed, i.e., independent of the stroke, and arranged in series with the second throttle 5. The first and the second throttle 4a, 5a vary with the stroke, since their curtain As1, As2 increase with increased stroke. But since the third fixed throttle 6a is connected in series with the second throttle, the second flow q2 is throttled more by damping medium than the first flow q1 so that the relation between the first and the second flow of damping medium q1/q2 increases with increased stroke s. Hence, the second pressure p2 decreases more in relation to the first pressure p1 between the third 6a and the second throttle 5a than the pressure decrease produced by the main flow q across the first throttle 4a, i.e., the difference between the third and the first pressure p3-p1. At small stroke, the flow of damping medium is so low that the first pressure p1 and the second pressure p2 are almost the same. It is recalled that the differences p1-p2, p1-p3 and p2-p3 are proportional to the (opening) forces acting on the respective throttles. For simplicity of the below analysis, the lowest pressure p3 may be chosen as a zero level, so that in particular p3=0.

Figure 3b shows the pressure regulator according to an embodiment of the invention in cutaway view for three different sizes of the valve member's stroke in relation to the seat part - for sake of clarity, only half the regulator is shown. The regulator comprises a movable valve member 3, which works against a seat part 2 including at least a first and a second seat 4, 5. The valve member 3 in this case is a circular washer. This valve member 3 divides the pressure regulator into at least one upstream $V_u$ and one downstream volume $V_d$. The seat part 2 has cut-outs arranged inside the first 4 and second seat's 5 circumference. These cut-outs form first and second volumes $V_1$, $V_2$. In the upstream and downstream volumes $V_u$, $V_d$ the aforementioned upstream and downstream pressures p1, p3 are active. These pressures are caused by a pressure drop, which depends on the valve member's 3 pressure-influenced regulator areas Ar1, Ar2 and its respective degree of opening or stroke s. The pressure-influenced regulator areas Ar1, Ar2 have a circumference $O_4$, $O_5$ that is defined by the placement of the seats in the seat part. If the circumference $O_4$, $O_5$ of the pressure-influenced regulator areas Ar1, Ar2 is multiplied by the distance/stroke s which opens the valve, it creates a gap with a defined curtain area As1, As2 through which it is possible for the damping medium to flow.

When the valve member 3 opens, it moves a distance from its position of rest against the first and second seat 4, 5, described by the stroke s. The stroke s is a function of the flow of damping medium q created by the pressure drop across the valve member 3, which when the pressure regulator is open can flow with the first flow q1 between the first seat 4 and the valve member 3 and with the second flow q2 between the second seat 5 and the valve member 3. The first volume $V_1$ is for the most part connected directly to the upstream volume $V_u$ while the second volume $V_2$ is connected to the upstream volume $V_u$ via the fixed throttle 6a. Due to the direct connection of the first volume $V_1$ to the upstream volume $V_u$ the pressure in the first volume $V_1$ is also for the most part equal to the first pressure p1. By interconnection between the second volume $V_2$ and the volume $V_u$ via the fixed throttle 6a, the second pressure p2 is also for the most part equal to the first pressure p1 at low stroke s and flow q.

The soft opening of this aspect of the invention is thus created by at least one throttling unit RU comprising two parallel stroke-variable first and second throttles 4a, 5a, which can be said to have a first d1 and second d2 diameter equivalent to the circumference $O_4$, $O_5$, and a fixed third throttle 6a arranged in series with the second throttle and having a third equivalent diameter d3. The first and second throttle vary with the stroke, since their curtain areas As1, As2 increase, being dependent on the design of the first and second volumes $V_1$, $V_2$. This means they let through a larger flow of damping medium with the stroke s. But since the third fixed throttle 6a interconnects the second volume $V_2$ and the upstream volume $V_u$, the second flow q2 of damping medium is throttled more to the second volume $V_2$ than is the first flow q1 to the first volume $V_1$. Thus, the pressure p2 drops in the second volume $V_2$ in relation to the pressure p1 in the first volume $V_1$ when the valve member has moved more than a given small stroke. At small stroke, roughly equal to zero, the flow of damping medium is so low that the pressure in both the first and the second volume $V_1$, $V_2$ is practically equal to the first pressure p1.

The first pressure p1 acting on the regulator area Ar1 creates a first regulator force Fr1 and the second pressure p2 acting on the regulator area Ar2 creates a second regulator force Fr2. Both forces act in the opening direction on the valve member 2, so they can add up to form a total regulator force Fr. This total regulator force Fr can be balanced out by an opposing total force Fa created by one or all of spring forces Fs, pilot forces Fp and additional flow and friction forces Fq, also see the following embodiments of the invention and the mathematical treatment below. Since the pressure p2 decreases in relation to the main pressure p1 with a rate of decline dictated by the size of the third throttle 6a, the second regulator force Fr2 also decreases in relation to the first regulator force Fr1. Since the first pressure p1 acts in theory with no serial throttling directly on the first regulator area Ar1, the first regulator force Fr1 will thus grow in proportion to the decrease of the second regulator force Fr2, whereupon the main pressure p1 grows with the total flow q.

Thus, the main pressure p1 in the first volume $V_1$ is dominant and controlling at large stroke and a variation of the pressure p1, p2 in the two volumes $V_1$, $V_2$ occurs preferably continually in proportion to the stroke s. By a well-tuned size for the fixed throttle 6a in combination with the size of the first and second throttles 4a, 5a, a soft opening can be accomplished. This shall now be described mathematically.

The flow resistance RS1, RS2, Rf through the different throttles is dictated by the particular throttle's curtain area As1, As2 and the fixed throttle area

Af times a flow coefficient Kq. The size of the curtain areas As1, As2 is dictated by the throttles' equivalent diameters d1, d2 times pi and the valve stroke s.

The series connection of Af and As2 means that the flow resistance at these two throttles together can be written:

$$R2 = Rs2 * Rf / (Rs2^2 + Rf^2)^{0.5}$$

For the entire throttling unit RU, q=q1+q2, which means that, if the flow resistance of the entire circuit is expressed as R, based on the regulated main pressure p1 we get the relation:

$$R*p1^{0.5}=Rs1*p1^{0.5}+R2*p1^{0.5}$$

Thus, the fact that the two resistances R2 and Rs1 are connected in parallel gives

$$R=R2+Rs1$$

The flow resistance of the entire throttling unit RU thus becomes

$$R= RS2*Rf/(RS2^2+Rf^2)^{0.5}+RS1$$

To further develop the reasoning, the equilibrium of forces at the valve member 3 can also be described mathematically by the following formulas:

For the total regulator force Fr we have:

$$Fr1=Ar1*p1,$$

where $Ar1=Pi/4*d1^2$ and p1 is the main regulating pressure acting in the first volume $V_1$

$$Fr2=Ar2*p2,$$

where $Ar2=Pi/4*d2^2$ and p2 is the pressure acting in the second volume $V_2$

The pressure p2 in the second volume $V_2$ is given by the flow relation:

$$q2=Rf*(p1-p2)^{0.5}=Rs2*p2^{0.5} ,$$

which can be solved to obtain p2 as a function of p1

$$p2=p1*(Rf^2/(Rs2^2+Rf^2))$$

The total regulator force Fr can thus be expressed as if the main pressure p1 is acting on an imaginary regulator surface Ar, which can be solved from the formula:

$$p1*Ar=p2*Ar2+p1*Ar1= p1*(Rf^2/(Rs2^2+Rf^2))*Ar2+ p1*Ar1$$

and thus:

$$Ar= (Rf^2/(Rs2^2+Rf^2))*Ar2+Ar1$$

The equilibrium of forces at the valve member 3 can also be expressed mathematically by the following relation which describes the pilot pressure force acting in the opposite direction to the opening of the valve member 3:

$$Fp=Pp*Ap,$$

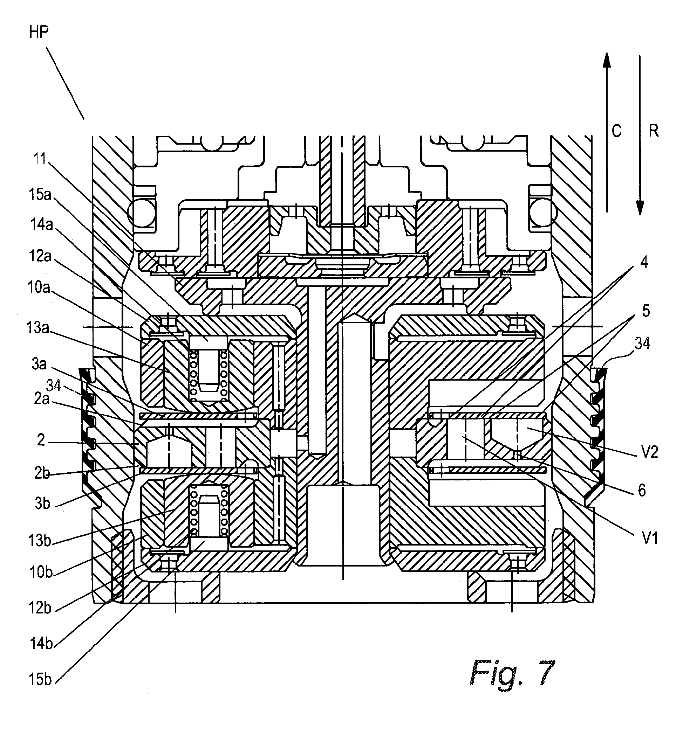

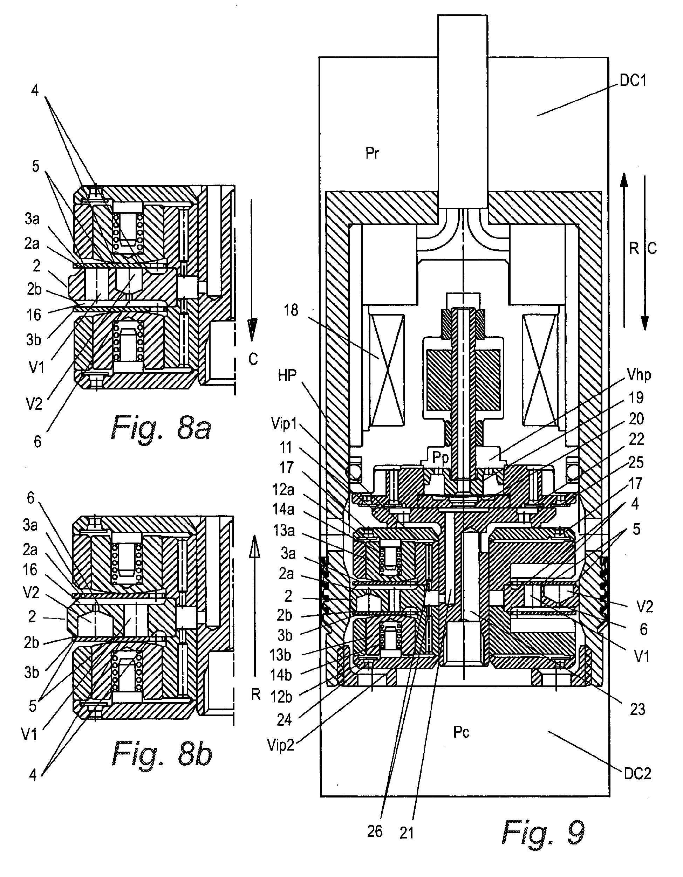

where Ap is the area creating the force on the valve member 3 in closing direction and preferably being the area on the plunger(s) 13a, 13b described in connection with Fig. 7. The pressure acting on the valve member 3 via the plungers 13a, 13b is a pilot pressure Pp, this also being described more closely in connection with Fig. 7 and 9.

In fig. 7, the plunger(s) 13a, 13b are also acted upon by a main spring 14a, 14b having a main spring coefficient C and a pretensioning sp, so that the spring force Fs varying with the stroke s can be written:

$$Fs=C*(s+sp)$$

The flow forces Fq acting on the valve member 3 can be simplified and written as:

$$Fq=Kfq*Kq*Ka*s*p1=Kfq*R*p1,$$

where the product of the flow coefficient Kq, area coefficient Ka and stroke s is interpreted as a stroke-dependent throttling R=Kq*Ka*s. The flow force coefficient Kfq has been taken from Bernoulli's familiar flow force equation

$$Fq=Kfq*q*p^{0.5}.$$

The regulator force Fr, conceived as the product Ar *p1, is balanced out by the sum of the partial forces coming from springs Fs, flow forces Fq and in the present instance pilot pressure forces Fp. Hence,

$$Fr=Fp+Fs+Fq,$$

which leads us to the final formula:

$$Ar*p1= C*(s+sp) + Kfq*R*p1+ Pp*Ap,$$

where p1 can be solved and expressed explicitly as the result of the balance of forces:

$$p1=\sum Fa/\sum Ar=(pp*Ap+C*(s+sp))/(Ar-Kfq*R)$$

It then becomes apparent, by the simplified flow theory, that the adjusting forces Fa must be distinguished and that some of the flow forces in this treatment are included in the regulator area Ar.

If, in this situation, one describes the flow in order to create an expression for the soft opening in a pressure vs. flow diagram, it therefore becomes:

$$q=R*p1^{0.5},$$

where the flow resistance R of the entire throttling unit RU varies with the stroke by the above described notion of the invention. This property of the flow resistance R has been discussed above.

It can also be described that during the initial portion of the stroke, p1 is for the most part equal to p2. This means that the pressure drop in the third fixed throttle 6a is almost equal to zero in the first throttle. Hence, this means a pressure level having a low value upon opening but growing as the flow increases. When the pressure p2 then decreases in the second volume $V_2$ the pressure drop increases due to the first flow resistance RS1 and at the same time the pressure drop across the second throttle 5a decreases, while the pressure drop p1-p2 across the fixed throttle 6a increases. The first opening of the valve may be referred to as cracking.

This means that the valve both opens and closes with a soft motion, since the opening and closing pressure is low at the start of the stroke and reaches the desired value at the end.

Figure 3c shows an alternative embodiment of the third throttle 6a. Here there is direct contact between the second volume $V_2$ and the upstream volume $V_u$ via a hole in the form of a slit extending from the second $V_2$ to the first volume $V_1$. The slit has a height H and a width B and is an alternative embodiment of the fixed area Af'=pi/4*d3$^2$ in that Af''=B*H. Thus, also with this embodiment the equivalent diameter d3 of the third throttle 6a can be calculated by using the above assumption that the throttle is circular. Of course, this throttle can also be arranged as a hole extending through the seat 2 from the first $V_1$ to the second volume $V_2$. An advantage of this embodiment is that the seat part can be made thinner and thus more compact, since no two throttles are arranged in series (that is, arranged in the axial direction of the seat part).

Figure 3d illustrates a reflux behaviour arising in connection with some embodiments of the invention. A flow q1 enters a first volume $V_1$, and another flow q2 enters the second volume $V_2$ via a fixed throttle. Because the pressure in the first volume $V_1$ is generally higher due to the action of the fixed throttle, a reflux portion q4 of the first flow q1 is drawn into the second volume $V_2$ when the valve member is lifted. Such reflux may occur also in embodiments where no connection between the two volumes (such as a groove or cut-out extending between the volumes) exists; in these cases, the reflux q4 flows in the space formed between the lifted valve member and the seat part.

This effect may help understand regulators according to the invention. As follows from the above analysis, the soft opening character of such regulators is related to the size of the regulator area. The variable throttle at the second volume $V_2$ will contribute to the regulator area even in embodiments where this volume is not directly supplied with damping medium, or is supplied via a small fixed throttle. This means that soft opening properties can be achieved in a structurally compact manner.

In the embodiment illustrated in figure 3d, damping medium may leave the volumes $V_1$, $V_2$ either at the left end of the valve member or through an inner aperture 3c provided in the right portion of the valve member. The aperture 3c, which may be a slit or may be a collection of holes arranged radially, is preferably provided next to a cut-out 2c in the seat part, which is connected to the second volume $V_2$ and affords a larger passage for the flow. Because the first volume $V_1$, the second volume $V_2$ and the inner aperture 3c are laid out in the flow direction of a reflux as described above, the latter is likely to be more pronounced in this situation than if no inner aperture 3c had been provided. This not to say that the reflux is dependent on such constitution of the valve member. To the contrary, it has been found that a soft opening behaviour manifests itself also in regulators having a valve member without an inner aperture, sealing tightly at its inner border. It has also been found that regulators having a valve member in the form of a clamped or sliding shim plate or shim ring exhibit a soft opening behaviour if the seat part is arranged in accordance with the invention as regards volumes and/or throttles.

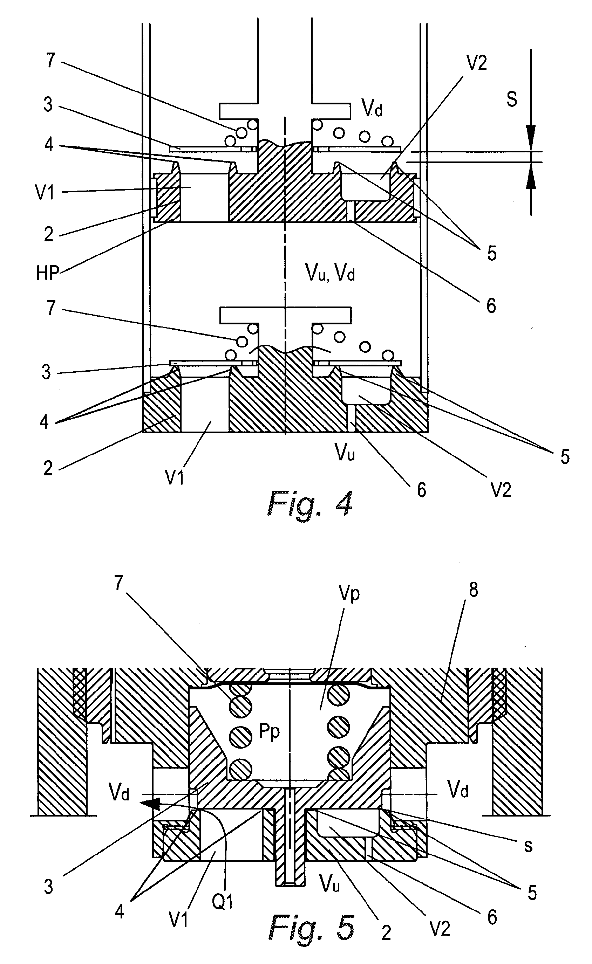

Figure 4 shows a first embodiment of the invention, illustrating a simplified sketch of a pressure regulator in the form of a valve 1, mainly designed to adjust the pressure in a damping medium flow in a shock absorber. The pressure regulator works here preferably like a check valve. The flow of damping medium is created by a movement in a shock absorber which creates a pressure difference across the main piston, designated HP in Fig. 4, which divides the shock absorber into two damping chambers. The pressure regulator in the figures can either be of a first kind and placed on the main piston or of a second kind and placed on another unit that divides the flow between the damping chambers. Here, again, a valve member 3 acts against a seat 2 which comprises a first, second and third throttle 4a, 5a, 6a. The opening regulator forces here are counteracted by a spring 7.

Figure 5 shows an example of a pilot-control valve. The valve has a housing 8 and an axially movable first valve member 3. The axially movable first valve member's 3 movement is restrained by the seat part 2, which can be integrated in or separate from the valve housing 8. When the valve is open, the damping medium Q1 flows from the upstream volume $V_u$ to the downstream volume $V_d$ in the passage with a variable flow opening s created between the valve member 3 and the seat part 2. The valve is a two-stage, pilot-controlled valve, which means that the force opening the main valve is dependent on the pilot pressure produced in a pilot chamber $V_p$. Some of the flow of damping medium Q1 goes through an inlet hole in the valve member 3 and the seat part 2 to the pilot chamber $V_p$ so that the counter-pressure on the valve member increases. Thus, in this case, the total regulator force Fr of the valve is balanced by an opposing total force Fa created by spring forces Fr from the spring 7, other possible flow and friction forces, plus the forces Fp created by a pilot pressure Pp in the pilot chamber $V_p$.

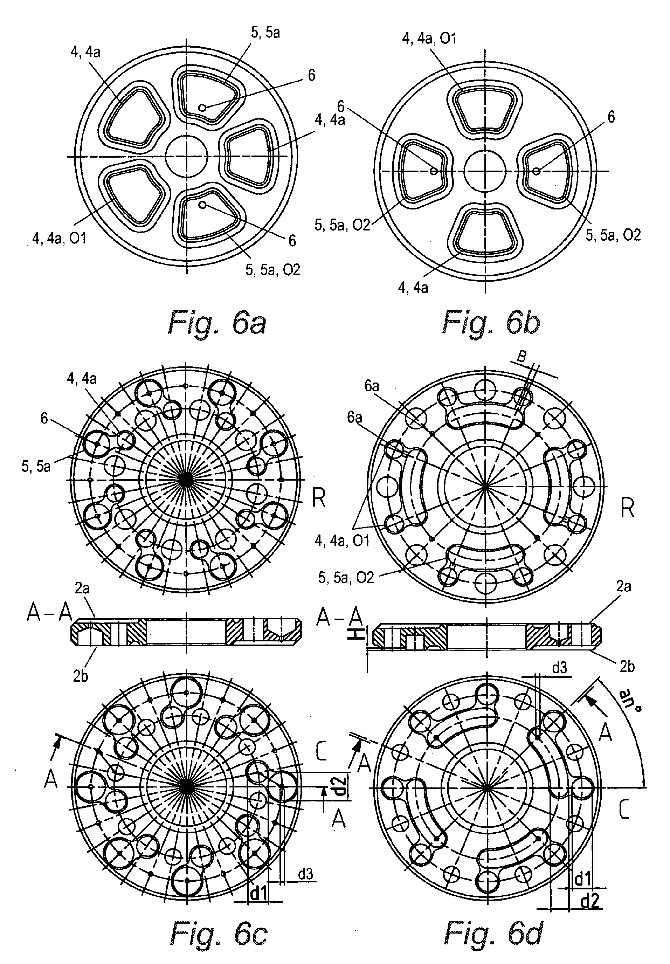

Figure 6a-d shows alternative embodiments of the seat part 2 with different geometries producing the same function.

Figure 6a and 6b show a plan view of the seat part 2 where the first and the second seat 4, 5 with their respective volumes $V_1$, $V_2$ have the shape of a sector. The circumference $O_4$, $O_5$ which the seats 4, 5 and thus also the throttles 4a, 5a can have is defined as an equivalent diameter d1 or d2, given by the formulas:

$$d1 = O_4/pi \; ; \; d2 = O_5/pi$$

The throttles 4a, 5a in Fig. 6b have been partly arranged in two groups or throttling units RU symmetrically about the centre line consisting of two first and second volumes $V_1$, $V_2$ and seats 4, 5. In Fig. 6a the throttles are arranged in asymmetrical groups or throttling units RU with two first and second volumes $V_1$, $V_2$ and seats 4, 5 plus a first volume $V_1$ and seat 4. The third throttle 6a in both Fig. 6a and 6b is interconnected with the second seat's 5 volume $V_2$ and preferably has the form of a hole with diameter d3.

Figure 6c shows another embodiment of the soft-opening function, where the first and second seat 4, 5 with respective volume $V_1$, $V_2$ form a throttling unit RU and the respective seat has the form of part of a circle with diameters d1 and d2. The first seat diameter d1 here is somewhat smaller than the second seat diameter d2 so as to optimise the damping properties of the shock absorber valve. Here as well the third throttle 6a is interconnected with the second seat's 5a volume $V_2$ and has the form of a hole with diameter d3.

The throttling units RU in Fig. 6c are grouped in eight units and optimised for compression as regards the choice of the throttle diameters d1, d2 and d3. Moreover, eight throttling units RU are placed on the opposite side 2b of the seat part 2, which are also optimised, but now for rebound, in regard to choice of the throttle diameters d1, d2 and d3.

Figure 6d shows another alternative embodiment of the seat part 2 with different geometries for the compression side and the rebound side 2a, 2b of the seat part 2. The throttling unit RU on the compression side 2a consists of two first throttles 4a with diameter d1 and circumference 01, a second kidney-shaped throttle 5a with circumference 02, which is determined by the groove width d2 and can be defined as the equivalent diameter d2, and a fixed third throttle 6a with diameter d3. The same layout of the throttling units RU is also repeated on the rebound side 2b of the seat part, but here the hole acting as the third throttle 6a has been replaced by slits of width B and depth H extending between the first and the second throttles' volumes $V_1$, $V_2$. The third throttle 6a can still be assumed to have an equivalent diameter d3 defined by its width and depth. Each throttling unit RU is repeated preferably four times on the respective side 2a, 2b of the seat part 2.

It is noted that a reflux phenomenon, similar to that discussed in connection with figure 3d, may arise on the rebound side 2b of the seat part 2 shown in figure 6d. Indeed, the second volume $V_2$ will be supplied with damping medium via the first volume and not directly from the compression side 2a. Because a groove is provided between the two volumes (cf. left portion of the cross-section), damping medium can flow also when the valve member is closed.

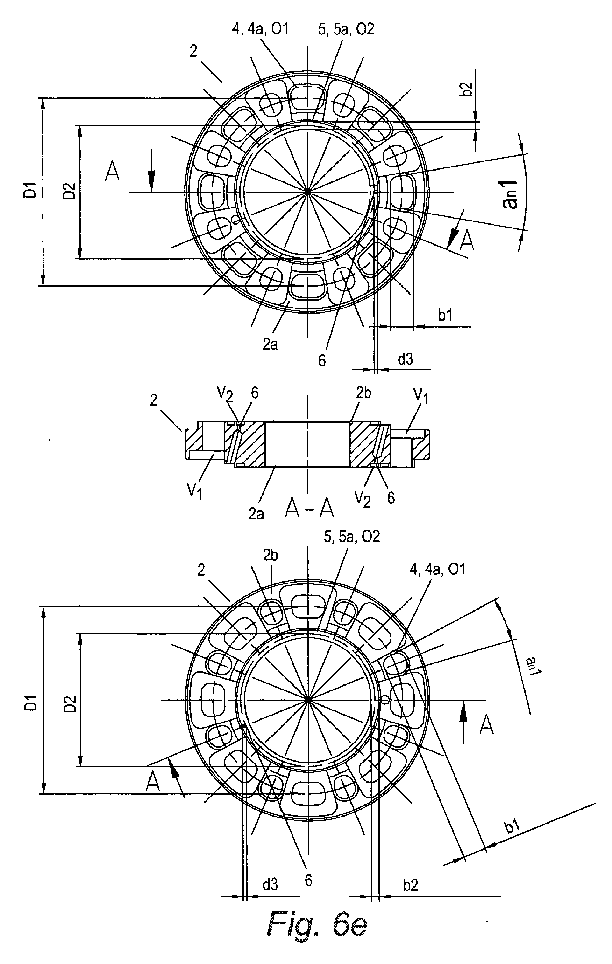

Figure 6e shows another alternative embodiment of the seat part 2 with the same type of geometry at the compression and the rebound sides 2a, 2b of the seat part 2. The throttling units RU on either side in this case consist of a first throttle 4a in the shape of a ring segment, defined in area and circumference by angle $a_n1$, radius r1, diameter D1 and width b1, which gives an equivalent diameter d1 and circumference 01. The throttling unit RU also consists of a second circular throttle 5a whose geometry is dictated by the groove width b2 and groove diameter D2, which can also be defined as the equivalent diameter d2 with circumference 02 and also a third fixed throttle 6a with diameter d3. The same design of the throttling units RU is also repeated on the rebound side 2b of the seat part and here the hole which functions as the third throttle 6a has the same geometry but individually adapted distance between the first and the second throttle volumes $V_1$, $V_2$. The third throttle 6a has here an equivalent diameter d3 the same as the dimension d3 indicate in the figure. Each throttling unit RU has no repetition in this case, since there is one second throttle 5a for eight first throttles 4a on the respective side 2a, 2b of the seat part 2. This example shows how the invention allows for variation in shape over broad limits yet still stays clearly within the range of protection of the patent.

Figure 7 shows a dual-action pilot-controlled shock absorber valve with a pressure regulator where the flow is allowed in both the compression and the rebound direction. The pressure regulator here has one seat part 2 and on either side of the latter a first and a second valve member 3a, 3b. The seat part 2 with its valve members 3a, 3b are mounted between a first and a second main housing 10a, 10b in a holder 11 bounded at both ends by a first and a second cover 12a, 12b. This unit is designed to be part of the main piston HP which divides the damping chambers of a shock absorber, where the movement of the main piston in relation to a damping cylinder creates the flow of damping medium adjustable by valve.

In the first and second main housing 10a, 10b are arranged one or more plungers 13a, 13b, designed to create an opposing force in the form of a pilot pressure force Fp on the first and the second valve members 3a, 3b and arranged symmetrically around the holder 11. The plungers 13a, 13b also provide support for at least a first and a second main spring 14a, 14b, which likewise create an opposing force Ff on the valve members 3a, 3b. The spring force can be adjusted with holders 15a, 15b. The total opposing force Fa as defined by Fp+Ff balances the total regulating force Fr of the valve that is created by the flow of damping medium through the seat part, operating as described above.

The working range for the pressure regulator, i.e., the difference between highest and lowest pressure, is determined by the number of plungers 13a, 13b which can be used for the particular application. The shape of the part of the plungers 13a, 13b facing the valve member is significant for how the opening movement of the valve member 3 occurs in relation to the seat part 2. If the throttling units RU are placed symmetrically on the seat part 2, the valve member 3 will open for the most part in parallel with the seat part 2 and the plungers 13a, 13b. If, instead, the throttling units RU are placed asymmetrically on the seat part 2 then the regulator lift forces can be said to be divided to work at different points, likewise asymmetrically placed on the seat part as are the throttling units RU. Depending on the shape of the plungers 13a, 13b, the valve member 3 can tip/tilt about one or more of the plungers 13a, 13b so that when it opens the valve member 3 has an angle in relation to the seat part 2. This angle varies with the stroke and with the flow of damping medium through the throttling units RU. A damping of the movement of the plungers 13a, 13b can be produced, e.g., by means of throttles 26 (fig. 9) in a pilot flow channel 21. The throttles 26 are placed so as to determine the size of the pilot flow, but also to produce a damping of the plungers' movement and, thus, of the valve as a whole.

The plungers 13a, 13b can also be different in number at the compression 2a and rebound side 2b of the seat part 2 in order to provide a dual-action function and an asymmetry, e.g., so that the pressure level during the rebound stroke R is greater than during the compression stroke C. An asymmetrical placement of the plungers 13a, 13b has the goal of creating both highest and lowest pressure levels and corresponding characters to fulfil the customer's wishes. Furthermore, the springs 14a, 14b inside symmetrically placed plungers 13a, 13b can be arranged asymmetrically in terms of pretension and spring constant. The respective springs 14a, 14b can thus have different pretension and spring constant. The number of plungers and their diameters can also be used in order to adapt the size of the pressure level/ working region.

The seat part 2 in this embodiment is dual-action, which means that one or more of combinations of a first and a second volume $V_1$, $V_2$ with respective first and second seat 4, 5 are arranged on both sides of the seat part. The first valve member 3a is arranged at the seat part's first side 2a, which can also be called its compression side, and the second valve member 3b is arranged at the seat part's second side 2b, which can be called its rebound side. The size of the first and second volume is varied according to the differences in damping properties desired in the different damping directions C, R.

Figure 8a shows a side view of part of the piston unit with the parts that are active during a compression stroke C. The first volume $V_1$ with its first seat 4 of diameter d1 extends through the seat part 2 so that a flow path is created from the seat part's second 2b to its first 2a side. The second volume $V_2$ is delimited at the seat part's second side 2b, but a flow path is created from the seat part's second 2b to its first side 2a in that the third throttle 6a with diameter d3 is arranged as a hole in the second volume's $V_2$ pressure-influenced surface.

Figure 8b shows the piston unit's parts that are active during a rebound stroke R. The first volume $V_1$ with its first seat 4 of diameter d1 extends through the seat part 2 so that a flow path is created from the seat part's first 2a to its second 2b side. The second volume $V_2$ is delimited at the seat part's first side 2a but a flow path is created from the seat part's first 2a to its second side 2b in that the third throttling 6a of diameter d3 is arranged as a hole in the second volume's $V_2$ pressure-influenced surface.

Figure 8a and 8b show that the first and the second volumes $V_1$, $V_2$, which can be said to be arranged as a throttling unit RU, are repeated at least once at the seat part's respective sides 2a, 2b. This also shows extra cut-outs 16 arranged at the seat part's surface facing the respective side. These cut-outs 16 ensure that damping medium can flow into the respective throttling unit's first $V_1$ and second volumes $V_2$, while the flow to the second volume goes through the third throttle 6. The flow in a direction parallel with the stroke direction is hindered by the valve members 3a and 3b which lie against and seal both sides/surfaces 2a, 2b of the seat part 2.

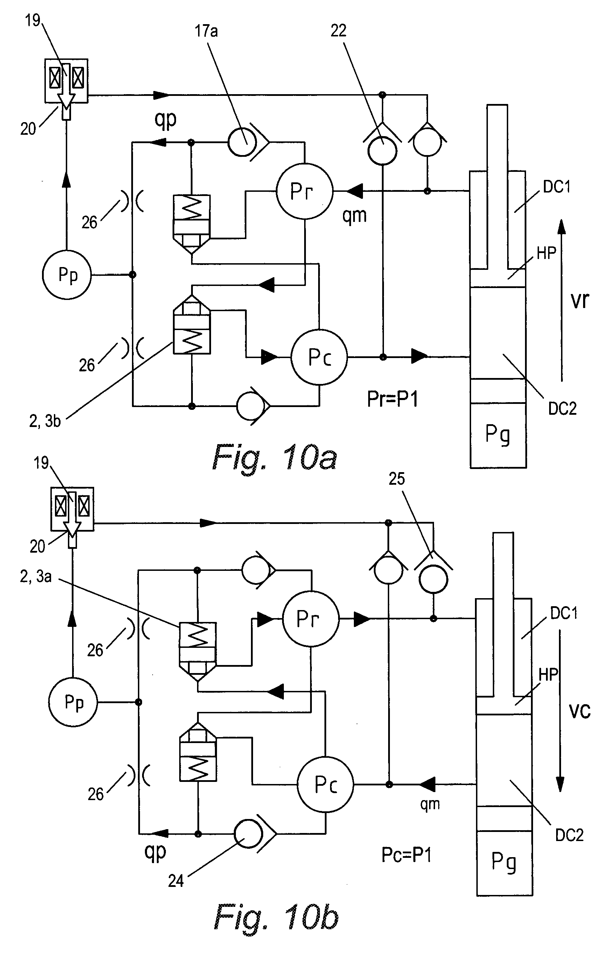

Figure 9 shows a pilot-controlled shock absorber valve including the pressure regulator according to an embodiment of the invention and Figures 10a and 10b show a schematic diagram of a shock absorber with a pilot-controlled valve and how the damping medium flows during a rebound and a compression stroke. The flow through the pressure regulator shall be explained by means of all three of these figures 9, 10a and 10b.

Figure 10a and 10b show that the shock absorber's damping body is divided into a first and a second damping chamber DC1, DC2 by a dividing part in the form of a main piston HP secured to a piston rod. The movement of the main piston in the damping cylinder creates a flow of damping medium between the respective damping chambers via the shock absorber valve. The shock absorber valve can be arranged in the main piston or also in a separate space interconnected with the damping chambers DC1, DC2. The hydraulic damping medium provided in the damping cylinder is pressurised with a gas pressure Pg to reduce the risk of cavitation in the damping medium, i.e., high cavitation pressure.

In Figure 10a, the main piston in the shock absorber body is moving in the rebound direction with a certain speed $v_r$ and compresses the first damping chamber DC1 or rebound chamber. The damping medium in the first damping chamber DC1 than has the pressure Pr, which is higher than the pressure Pc in the second damping chamber DC2. This pressure acts on both sides of the plunger 13a (fig. 9), which is then held in place by the spring 14a, and on the first side 2a - the rebound side - of the seat part 2, which means on the one hand that the first valve member 3a is pressed shut against its seat 2a and on the other hand that the second valve member 3b opens for a certain stroke s, depending on the main piston speed $v_r$. The damping medium then flows through the pressure regulator via the first, third, and second throttles 4a, 5a, 6a which contribute to the second valve member 3b lifting from the seat part with a soft movement. The regulator lifting forces which create the pressure in the damping chambers are counteracted by a spring force Fs created by the main spring 14b and by a pilot force Fp created by a pilot pressure Pp. The spring force Fs and the pilot force Fp both act via respective plungers 13a, 13b on the second valve member 3b.

The pilot force Fp is created in that a flow goes from the first damping chamber DC1 through a first upstream check valve 17 in the first cover 12a to a first inlet pilot volume $V_{ip1}$ provided between the first cover 12a and the first plunger(s) 13b.

The pilot pressure $P_p$ builds up in the inlet pilot volume $V_{ip1}$ by virtue of the pilot flow between the first and the second damping chambers DC1, DC2 and is adjusted via an ECU-controlled continuous electrical signal which controls the power supply to a solenoid 18, which regulates the position for a pilot actuator 19 in relation to a pilot valve seat 20 in a main pilot volume $V_{hp}$. A controllable flow opening arranged to throttle the flow of damping medium is created between the pilot valve seat 20 and the pilot actuator 19. Thus, it functions by the principles which are described in EP 0 942 195. The size of the flow opening and the pilot actuator's 19 position in the main pilot volume $V_{hp}$ is determined by a balance of forces on the pilot actuator 19. The balance of forces is primarily created by the sum of the adjusting force from the solenoid 18 and any additional spring forces or the like, against the action of the opposing regulator force Fr, depending on the pressure in the inlet pilot volume $V_{ip}$.

The inlet pilot volume $V_{ip1}$ is interconnected with the main pilot volume via a first pilot flow channel 21 arranged in the holder 11. The pilot damping medium then flows via a first downstream check valve 22 through a second pilot flow channel 23 in the holder 11 to the second damping chamber DC2.

In Fig. 10b, the main piston in the shock absorber body flows in the compression direction at a certain speed $v_c$ and compresses the second damping chamber DC2. The damping medium in the second damping chamber DC2 then has the pressure Pc which is higher than the pressure Pr in the first damping chamber DC1. This pressure acts on the second side 2b of the seat part 2, which means that the first valve member 3a opens for a certain stroke s, which depends on the main piston speed $v_c$. The damping medium then flows once again through the pressure regulator via the first, third and second 4a, 6a, 5a throttles. The lifting regulator forces which create the pressure in the damping chambers are counteracted by a spring force Fs, created by the first main spring 14a, and by a pilot force Fp created by the same pilot pressure Pp that acts via the plunger(s) 13a on the first valve member 3a.

The pilot flow in this Fig. 10b goes from the second damping chamber DC2 through a second upstream check valve 24 in the second cover 12b to a second inlet pilot volume $V_{ip2}$ arranged between the second cover 12b and the second plunger(s) 13a. The second inlet pilot volume $V_{ip1}$ is interconnected with the same main pilot volume $V_{hp}$ via the same first pilot flow channel 21 arranged in the holder 11. The pilot damping medium then flows via a second downstream check valve 25 directly to the first damping chamber DC1.

The shock absorber valve is functionally symmetrical, which means that downstream and upstream change places upon movement of the piston. Furthermore, the valve has a large number of parts that repeat in order to keep down the cost and number of unique parts.

To facilitate the main installation process, the main valve packet with its main piston HP can also be riveted together into a unit. This is done preferably in a sideways installation. This unit is shown in Fig. 7, where the holder 11 is riveted at its lower end to keep the piston parts in place. The unit can also include a version of the main valve packet where solenoid and piston are integrated or a version where the valve's outer housing and the piston are integrated. The main valve packet is preferably held together by a nut which gathers the valve packet together and provides pretensioning and sealing for a number of parts in the valve. Thanks to this pretensioning, no soft gaskets are needed, which favours the compact and cost-effective design being sought after.

It is possible to vary the previous embodiment by providing alternative means, other than rivets, for gathering the main valve packet and its main piston HP into a unit. Preferably, press fit or force fit is used. The components may also be snapped together or joined by a combination of snapping and press fit.

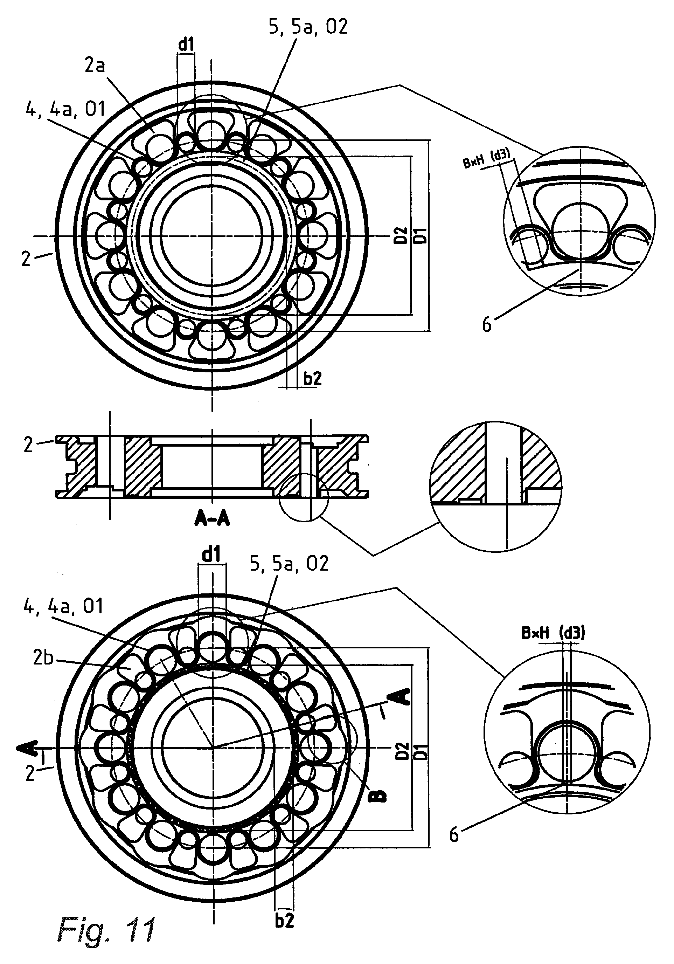

Figure 11 shows an alternative embodiment of the seat part 2 which has the same type of geometry at both its compression side 2a and its rebound side 2b and which may be used with a valve member similar to those previously described. Herein, a throttling unit RU on either side includes a first throttle 4a in the form of a circular hole, the area of which is determined by a first (equivalent) diameter d1 or circumference O1. The first throttle 4a admits a flow of damping medium from a first volume V1. There is also a circular groove 5a provided on each side 2a, 2b of the seat part 2 and functioning as a second throttle, admitting flow from a second volume V2. The geometry of the aperture 5a may be described by the groove width b2 and groove diameter D2, but may also be described in terms of the second equivalent diameter $d2=O2/pi$ computed on the basis of the circumference $O2=pi*(D2 + b2/2 + D2 - b2/2)=pi*D2$ of the aperture 5a. As shown on the drawing, the geometry of the groove 5a (second throttle) may vary between the two sides of the seat part 2, so as to create different compression and rebound damping properties. The groove 5a may also be discontinued or even partitioned into several sub-grooves. The throttling unit RU also comprises a third, fixed throttle 6a in the form of a groove, which may be executed directly in the material and which connects the first and second volumes V1, V2. The area of the third throttle 6a is given by the groove depth H and groove width B, which values yield the third equivalent diameter d3=03/pi=2(B + H)/pi, where 03 is the circumference of the flow passage afforded by the throttle 6a. This structure is analogous on both sides 2a and 2b of the seat part 2, and the throttling unit RU may be repeated several times on each side. During operation, the third throttle 6a will admit a certain flow of damping medium between the first and second volumes V1, V2. This way, the second volume V2, which does not communicate directly with the other side of the seat part 2, is supplied with damping medium via the first volume V1, enabling it to exert an opening force on a valve member. In the closed position of the valve member, the flow into the second volume V2 is restricted by the third throttle 6a. When the valve member is lifted , damping medium flows between this and the seat part 2. The pressure in the second volume V2 is generally lower than in the first volume V1, and similarly to the situation shown in figure 3d, a certain fraction q4 of the flow out of the first volume V1 enters the second volume V2 before leaving the seat part and continuing towards the downstream damping chamber. The Thus, in practice, the regulator area Ar will be the sum of the regulator areas of the first and second throttles 4a, 5a. This affords a soft opening character to the regulator even though the latter is structurally compact. More precisely, the lowest pressure drop (difference between first and third pressures p1-p3) over the valve is maintained at a low value in all the activated situations: when the pilot pressure is close to zero, that is, when the valve is not active, when the pilot pressure is at maximum, that is, the valve is fully activated, and the stages therebetween.

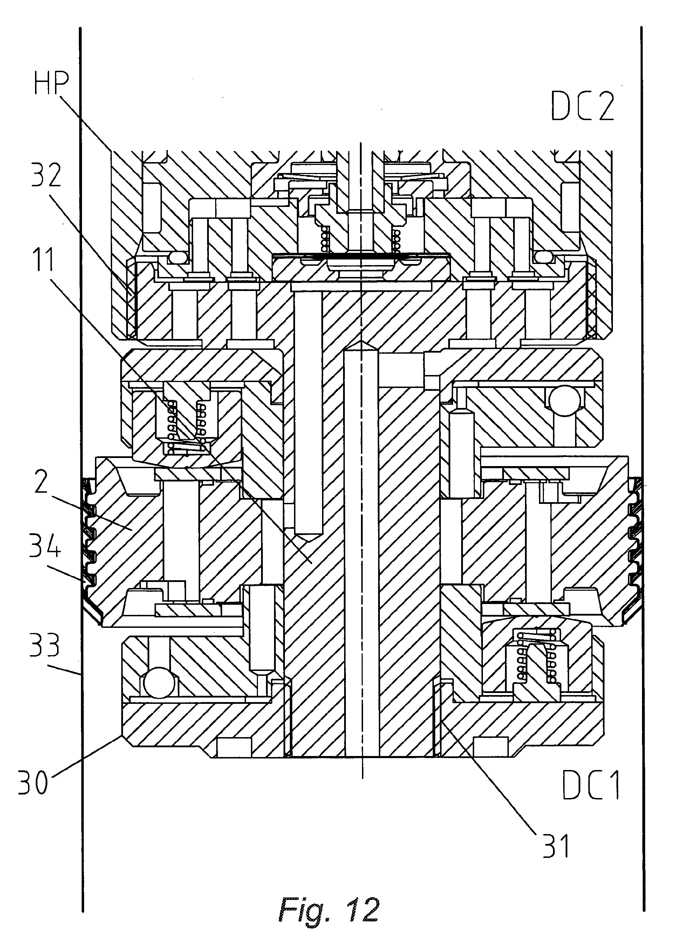

The size of the fraction q4 is dependent on the selected geometry. Advantageously, the seat part of figure 11 is used in connection with a valve member in the form of a thin, ring-shaped disc, which is centred by the housing on the inner side and has an inner aperture (clearance) 3c, through which damping medium exits primarily from the second volume V2. Preferably, the valve member covers the volumes V1 and V2 and also extends a small radial distance outside of these. It can be seen in figure 12 that the valve inner aperture 3c of the valve member coincides  approximately with a shallow cut-out in the seat part, similar to the cut-out 2c of figure 3d. The inner boundary of the aperture 3c is still located radially so far from the second volume V2 that an overlap is ensured.

In this embodiment, each side of the seat part 2 comprises twelve first throttles 4a, two third throttles 6a and one second throttle 5a; still, the number of throttles (especially of first and third throttles 4a, 6a) may be different in other embodiments. In particular, the grooves 6a may be entirely omitted, especially if the first and second throttles 4a, 5a are arranged at a small separation, which will cause the second throttle 5a to be supplied with damping medium by reflux only, similarly to the situation depicted in figure 3d. Although such reflux may only take place in a lifted position of the valve member, the regulator will have a soft opening character by virtue of its large effective regulator area afforded by the addition of the second throttle's 5a area. This example shows once more that the invention can be embodied in many different forms having a wide range of geometries which yet fall under the scope of protection of the invention.

Figure 12 shows a variation to the embodiment disclosed in figures 7 and 9. The dividing part of the main piston HP is threaded 32 onto the holder 11. The seat part 2 is retained by the second cover 12b, which has the shape of a nut screwed onto the holder 11 through a threading 31. Seats for variable throttles are provided in the seat part 2, as discussed above. The seat part 2 also acts as a hydraulic divider between the two damping chambers DC1, DC2, by sealing against the damper tube wall 33 for thereby separating the two chambers DC1, DC2. In particular, the seat part 2 may support a gasket 34 cooperating with the damper tube wall. In contrast hereto, a corresponding seal (or gasket) is supported by the main piston HP itself in the embodiment shown in figure 7 and 9. Thus, the seat part 2 shown in figure 12 may be considered to be a piston seat. An advantage of this embodiment is that the diameters D1, D2 (cf. figure 11) of the seat part 2 can be made larger without increasing the size of the  damper tube. Again, this ensures a large regulator area Ar, which gives a low lowest pressure drop p1-p3 over the valve when the pilot pressure is close to zero (non-activated valve), thereby furthering soft opening behaviour.

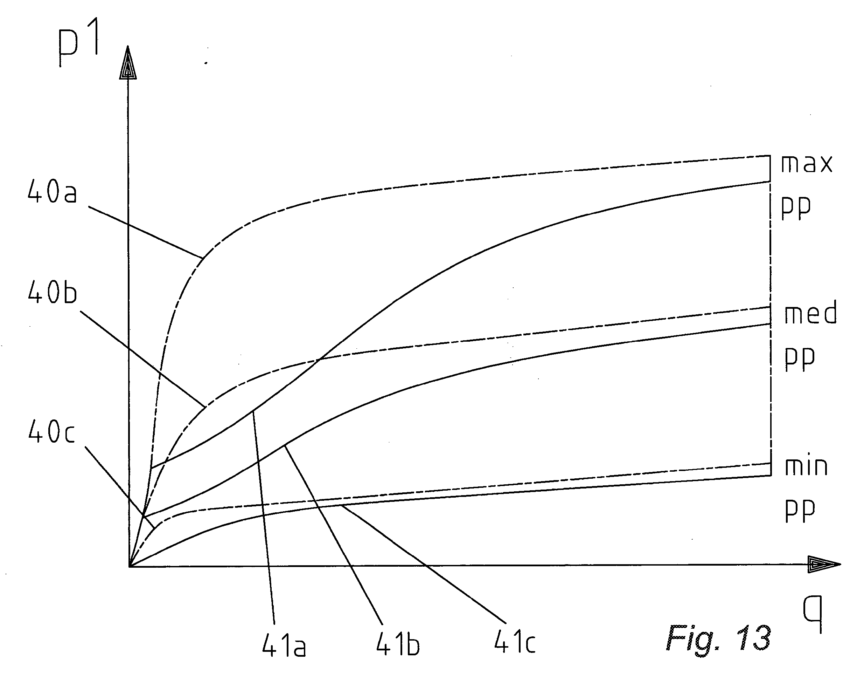

Figure 13 illustrates results of a numerical simulation of a flow system including a pilot-controlled pressure regulator according to the invention. The figure is a graphical illustration of the influence of the (third) fixed throttle size, where dash-dotted curves 40 refer to a relatively smaller fixed throttle and solid lines 41 refer to a relatively larger fixed throttle. The curves labelled by "a" refer to a regulator having a relatively large pilot pressure (that is, the flow path from the pilot chamber towards the downstream damping chamber is relatively restricted so that a large pilot pressure may build up), the curves labelled by "b" refer to an intermediate pilot pressure, and the curves labelled by "c" refer to a relatively lower pilot pressure. All other parameters are kept constant between the cases. It is noted that the numerical simulation relates to a complex system, including more flow-influencing components than the pressure regulator only, which is why in particular curves 41 a and 41 b do not have a clear-cut shape.

It is seen in figure 13 that the relatively smaller fixed throttle generally gives a more flattened pressure-flow dependence, thus one that differs more from a corresponding curve for a conventional, non-soft-opening regulator. It is sometimes possible to see a sharper transformation between the rising and the stagnating portions of the curve for a smaller fixed throttle. Clearly, the more the fixed throttle size is increased, the more the regulator will resemble a valve equipped with a plurality of parallel stroke-variable throttles, which is not known to have soft opening properties in the sense of the present invention. Accordingly, the difference between the rising and stagnating portions of the curve may be less noticeable and the transition between these will be more extended in such cases. On the other hand, for a very narrow fixed throttle and a large separation of the first and second volumes V1, V2, the latter of these may have a reduced supply of damping medium, which may also affect the soft opening properties. Accordingly, by routine experimentation the skilled person will find a fixed throttle size between these extremes which provides desirable soft opening properties.

In one embodiment of the invention, a pressure regulator designed to adjust the pressure of a total flow of damping medium between an upstream and downstream volume with a first and a third pressure in a shock absorber valve has the following characteristics: the pressure regulator comprises a valve member which moves with an axial stroke in relation to a seat part with a first side having at least a first and a second seat so as to create a flow opening varying with the stroke between the valve member and the first and second seat; the flow opening is arranged to throttle the total flow of damping medium between the upstream and downstream volumes; the seat part comprises at least two parallel first and second throttles, whose flow throttling ability is determined by the shape of the seats, and a third non-variable throttle arranged in series with the second throttle; the first and the second throttle vary with the stroke, so that a first flow of damping medium goes through the first throttle and a second flow of damping medium goes through the second and the third throttle; and the ratio between the first and third pressures and the ratio between the first and second flow of damping medium increase with the stroke.

The invention is not limited to the above embodiments given as examples but can be modified in the framework of the following patent claims and the idea of the invention. For example, this invention can also be used in other types of shock absorber valves, mounted in or separate from the main piston.

## Claims

1. A pressure regulator adapted to adjust the pressure of a total flow (q) of damping medium between an upstream and downstream volume ($V_u$, $V_d$) at a first and a third pressure (p1, p3) in a shock absorber valve, said pressure regulator comprising a valve member (3) movable with an axial stroke (s) in relation to a seat part (2) with a first side (2a) having at least a first and a second seat (4, 5) so as to create a flow opening varying with the stroke (s) between the valve member (3) and the first and second seat (4, 5), wherein the flow opening is arranged to throttle the total flow of damping medium (q) between the upstream and downstream volumes ($V_u$, $V_d$), **characterised in that** the seat part (2) comprises at least two parallel first and second throttles (4a, 5a), the flow throttling ability of which is determined by the shape of the seats (4, 5), and a third throttle (6; 6a) arranged in series with the second throttle (5a) so that a first flow of damping medium (q1) of the total flow (q) goes through the first throttle and a second flow of damping medium (q2) of the total flow (q) goes through the second and the third throttle, wherein the first and the second throttle (4a, 5a) vary with the stroke (s) and the third throttle (6; 6a) is fixed and thus independent of the stroke (s), and wherein the ratio (q1/q2) between the first (q1) and second (q2) flow of damping medium increases with the stroke (s).

2. A pressure regulator according to claim 1, **characterised in that** the first and the second throttle (4a, 5a) is defined by a first (d1) and a second seat diameter (d2) which are equivalent to the respective circumference ($O_4$, $O_5$) of the throttles, so that the throttle (4a, 5a) can be given different geometrical shapes based on the defined circumference ($O_4$, $O_5$).

3. A pressure regulator according to claim 1 or 2, **characterised in that** the first and the second throttle (4, 5) vary with the stroke (s) **in that** their curtain areas (As1, As2) depending on the throttle diameter (d1, d2) and stroke (s) increase and let through a larger flow of damping medium with the stroke, at the same time as the third fixed, serially arranged throttle (6) ensures that the second flow of damping medium (q2) is throttled more than the first flow of damping medium (q1).

4. A pressure regulator according to claim 2 or 3, **characterised in that** the first side (2a) of the seat part (2) has cut-outs arranged inside the circumference ($O_4$, $O_5$) of the first (4) and second seat (5) which creates first and second volumes ($V_1$, $V_2$) arranged in the seat part (2), whose diameter (d1, d2) equivalent to the circumference defines pressure-influenced regulator areas (Ar1, Ar2) on the valve member (3).

5. A pressure regulator according to claim 4, **characterised in that** the third throttle (6; 6a) is configured as a hole with a third equivalent diameter (d3) that is arranged in the seat part 2 and that creates a flow opening between the upstream volume ($V_u$) and the second volume ($V_2$).

6. A pressure regulator according to claim 4, **characterised in that** the third throttle (6; 6a) is configured as a hole with a third equivalent diameter (d3) that extends between the first and the second volumes ($V_1$, $V_2$).

7. A pressure regulator according to claim 6, **characterised in that** the third throttle (6; 6a) is configured as a groove with a width (B) and a certain depth (H).

8. A pressure regulator according to any one of claims 4 to 7, **characterised in that** the first and the second volumes ($V_1$, $V_2$) along with the throttling units (4a, 5a, 6a) are arranged as a throttling unit (RU) which repeats at least once on the first side (2a) of the seat part (2).

9. A pressure regulator according to claim 8, **characterised in that** the seat part (2) also has a second side (2b) opposite the first side (2a) on which one or more throttling units (RU) are arranged.

10. A pressure regulator according to any one of the above claims, **characterised in that** the regulator is adapted to adjust the pressure (p1) of the total flow of damping medium (q) between a first and a second damping chamber (DC1, DC2) separated by a partition part (HP) which moves with a speed determined by the shape of the surroundings in a damping unit.

11. A pressure regulator according to claim 10, **characterised in that** the first and the second volume ($V_1$, $V_2$) together with the throttles (4a, 5a, 6a) are arranged as a throttling unit (RU) which repeats at least once at the first side (2a) of the seat part (2) and **in that** the damping medium (q) is able to flow through the pressure regulator via the first throttling units (RU) in a direction from the first (DC1) to the second damping chamber (DC2) and also in a direction from the second (DC2) to the first damping chamber (DC1) through the second throttling units (RU).

12. A pressure regulator according to claim 11, **characterised in that** the pressure regulator is mounted directly in the partition part (HP) of the shock absorber.

13. A pressure regulator according to claim 11, **characterised in that** the pressure regulator is arranged in a separate space interconnected with the damping chambers (DC1, DC2).

14. A pressure regulator according to claim 4, wherein said first volume ($V_1$) communicates directly with the upstream volume ($V_u$), and said second volume ($V_2$) communicates with the upstream volume ($V_u$) via the third throttle (6; 6a) and the first volume ($V_1$).

**Patentansprüche**

1. Druckregler, dafür eingerichtet, den Druck eines Gesamtstromes (q) eines Dämpfungsmediums zwischem einem prozessaufwärtigen und einem prozessabwärtigen Volumen ($V_u$, $V_d$) in einem Stoßdämpfungsventil auf einen ersten und einen dritten Druck (p1, p3) einzustellen, wobei der Druckregler ein Ventilelement (3) umfasst, das mit einem im Verhältnis zu einem Sitzteil (2) axialen Hub (s) beweglich ist, wobei das Sitzteil (2) eine erste Seite (2a) mit mindestens einem ersten und einem zweiten Sitz (4, 5) aufweist, so dass eine Strömungsöffnung erzeugt wird, die mit dem Hub (s) zwischen dem Ventilelement (3) un dem ersten und zweiten Sitz (4, 5) variiert, wobei die Strömungsöffnung dafür angeordnet ist, den Gesamtstrom des Dämpfungsmediums (q) zwischen dem prozessaufwärtigen und dem prozessabwärtigen Volumen ($V_u$, $V_d$) zu drosseln, **dadurch gekennzeichnet, dass** das Sitzteil (2) mindestens zwei parallele erste und zweite Drosseln (4a, 5a) umfasst, deren Stromdrosselungsfähigkeit durch die Form der Sitze (4, 5) bestimmt wird, und eine dritte Drossel (6; 6a), die derart in einer Reihe mit der zweiten Drossel (5a) angeordnet ist, dass ein erster Dämpfungsmediumstrom (q1) des Gesamtstromes (q) die erste Drossel durchquert und ein zweiter Dämpfungsmediumstrom (q2) des Gesamtstromes (q) die zweite und die dritte Drossel durchquert, wobei die erste und die zweite Drossel (4a, 5a) mit dem Hub (s) variieren und die dritte Drossel (6; 6a) feststehend und somit unabhängig vom Hub (s) ist und wobei das Verhältnis (q1/q2) zwischen dem ersten (q1) und dem zweiten (q2) Dämpfungsmediumstrom mit dem Hub (s) zunimmt.

2. Druckregeler nach Anspruch 1, **dadurch gekennzeichnet, dass** die erste und die zweite Drossel (4a, 5a) durch einen ersten (d1) und einen zweiten Sitzdurchmesser (d2) definiert sind, die den jeweiligen Umfängen ($O_4$, $O_5$) der Drosseln entsprechen, so dass der Drossel (4a, 5a), basierend auf dem definierten Umfang ($O_4$, $O_5$), verschiedene geometrische Formen verliehen sein können.

3. Druckregeler nach Anspruch 1 oder 2, **dadurch gekennzeichnet, dass** die erste und die zweite Drossel (4, 5) mit dem Hub (s) variieren, indem ihre Mantelflächen (As1, As2), die vom Drosseldurchmesser (d1, d2) und Hub (s) abhängen, zunehmen und mit dem Hub einen umfangreicheren Dämpfungsmittelstrom hindurchlassen, während die dritte feststehende, in Reihe angeordnete Drossel (6) gleichzeitig sicherstellt, dass der zweite Dämpfungsmediumstrom (q2) stärker als der erste Dämpfungsmediumstrom (q1) gedrosselt wird.

4. Druckregeler nach Anspruch 2 oder 3, **dadurch gekennzeichnet, dass** die erste Seite (2a) des Sitzteils (2) Ausschnitte aufweist, die innerhalb des Umfanges ($O_4$, $O_5$) des ersten (4) und des zweiten Sitzes (5) liegen, was ein erstes und ein zweites Volumen ($V_1$, $V_2$) erzeugt, die im Sitzteil (2) angeordnet sind und deren Durchmesser (d1, d2) äquivalent zum Umfang die druckbeeinflussten Reglerbereiche (Ar1, Ar2) am Ventilelement (3) definiert.

5. Druckregeler nach Anspruch 4, **dadurch gekennzeichnet, dass** die dritte Drossel (6; 6a) als eine Öffnung mit einem dritten äquivalenten Durchmesser (d3) gestaltet ist, die im Sitzteil (2) angeordnet ist und die eine Strömungsöffnung zwischen dem prozessaufwärtigen Volumen ($V_u$) und dem zweiten Volumen ($V_2$) erzeugt.

6. Druckregeler nach Anspruch 4, **dadurch gekennzeichnet, dass** die dritte Drossel (6; 6a) als Öffnung mit einem dritten äquivalenten Durchmesser (d3) gestaltet ist, die sich zwischen dem ersten und dem zweiten Volumen ($V_1$, $V_2$) erstreckt.

7. Druckregeler nach Anspruch 6, **dadurch gekennzeichnet, dass** die dritte Drossel (6; 6a) als eine Rille mit einer Breite (B) und einer bestimmten Tiefe (H) gestaltet ist.

8. Druckregeler nach einem der Ansprüche 4 bis 7, **dadurch gekennzeichnet, dass** das erste und das zweite Volumen ($V_1$, $V_2$) zusammen mit den Drosseleinheiten (4a, 5a, 6a) als Drosseleinheit (RU) angeordnet sind, die sich an der ersten Seite (2a) des Sitzteils (2) mindestens einmal wiederholt.

9. Druckregeler nach Anspruch 8, **dadurch gekennzeichnet, dass** das Sitzteil (2) außerdem eine zweite Seite (2b) aufweist, die der ersten Seite (2a) gegenüberliegt und an der eine oder mehrere Drosseleinheiten (RU) angeordnet sind.

10. Druckregeler nach einem der vorhergehenden Ansprüche, **dadurch gekennzeichnet, dass** der Regler dafür eingerichtet ist, den Druck (p1) des Dämpfungsmedium-Gesamtstromes (q) zwischen einer ersten und einer zweiten Dämpfungskammer (DC1, DC2) einzustellen, die durch ein Trennelement (HP) getrennt sind, das sich mit einer Geschwindigkeit bewegt, die durch die Form der Umgebung in einer Dämpfungseinheit bestimmt ist.

11. Druckregeler nach Anspruch 10, **dadurch gekennzeichnet, dass** das erste und das zweite Volumen ($V_1$, $V_2$) zusammen mit den Drosseln (4a, 5a, 6a) als Drosseleinheit (RU) angeordnet sind, die sich auf der ersten Seite (2a) des Sitzteils (2) mindestens einmal wiederholt, und dadurch, dass das Dämpfungsmedium (q) in der Lage ist, über die ersten Drosseleinheiten (RU) in einer Richtung von der ersten (DC1) zur zweiten Dämpfungskammer (DC2) durch den Druckregeler zu strömen und außerdem in eine Richtung vom zweiten (DC2) zur ersten Dämpfungskammer (DC1) durch die zweiten Drosseleinheiten (RU).

12. Druckregeler nach Anspruch 11, **dadurch gekennzeichnet, dass** der Druckregeler direkt in das Trennelement (HP) des Stoßdämpfers eingebaut ist.

13. Druckregeler nach Anspruch 11, **dadurch gekennzeichnet, dass** der Druckregeler in einem separaten Raum angeordnet ist, der mit den Dämpfungskammern (DC1, DC2) verbunden ist.

14. Druckregeler nach Anspruch 4, wobei das erste Volumen ($V_1$) direkt mit dem prozessaufwärtigen Volumen ($V_u$) in Verbindung steht und das zweite Volumen ($V_2$) mit dem prozessaufwärtigen Volumen ($V_u$) über die dritte Drossel (6; 6a) und das erste Volumen ($V_1$) in Verbindung steht.

**Revendications**

1. Régulateur de pression adapté pour ajuster la pression d'un débit total (q) de fluide d'amortissement entre des volumes en amont et aval ($V_u$, $V_d$) à une première et une troisième pression (p1, p3) dans une vanne d'amortisseur, ledit régulateur de pression comprenant un élément de soupape (3) pouvant se déplacer avec une course axiale (s) par rapport à une partie de siège (2) avec une première face (2a) comportant au moins un premier et un second siège (4, 5) de manière à créer une ouverture d'écoulement variant avec la course (s) entre l'élément de soupape (3) et les premier et second sièges (4, 5), dans lequel l'orifice d'écoulement est agencé de façon à étrangler le débit total de fluide d'amortissement (q) entre les volumes en amont et en aval ($V_u$, $V_d$), **caractérisé en ce que** la partie de siège (2) comporte au moins deux premier et second étranglements parallèles (4a, 5a), dont la capacité d'étranglement est déterminée par la forme des sièges (4, 5), et un troisième étranglement (6; 6a) disposé en série avec le second étranglement (5a) de sorte qu'un premier écoulement de fluide d'amortissement (q1) de l'écoulement total (q) passe à travers le premier étranglement et un deuxième écoulement de fluide d'amortissement (t2) du flux total (q) passe par le second et le troisième étranglement, dans lequel le premier et le second étranglement (4a, 5a) varient avec la course (s), le troisième étranglement (6; 6a) étant fixe et, par conséquent, indépendant de la course (s), le rapport (q1/q2) entre le premier (q1) et le second flux (q2) de fluide d'amortissement augmentant avec la course (s).

2. Régulateur de pression selon la revendication 1, **caractérisé en ce que** le premier et le second étranglement (4a, 5a) sont définis par un premier (d1) et un second diamètre de siège (d2), qui sont équivalents aux circonférences respectives ($O_4$, $O_5$) des étranglements, de telle sorte que l'étranglement (4a, 5a) peut être donné de différentes formes géométriques en fonction de la circonférence définie ($O_4$, $O_5$).

3. Régulateur de pression selon la revendication 1 ou 2, **caractérisé en ce que** le premier et le second étranglement (4, 5) varie avec la course (s), **en ce que** leurs zone de rideaux (As1, As2) en fonction du diamètre de l'étranglement (d1, d2) et la course (s) augmente et laisse passer un plus grand écoulement de fluide d'amortissement avec la course, en même temps que le troisième étranglement fixe disposé en série (6) fait en sorte que le second écoulement de fluide d'amortissement (q2) soit plus étranglé que le premier flux de fluide d'amortissement (q1).

4. Régulateur de pression selon la revendication 2 ou 3, **caractérisé en ce que** le premier côté (2a) de la partie de siège (2) est doté de découpes disposées à l'intérieur de la circonférence ($O_4$, $O_5$) du premier (4) et du second siège (5) qui crée les premier et second volumes ($V_1$, $V_2$) disposés dans la partie de siège (2), dont le diamètre (d1, d2) équivalent à la circonférence définit des zones de régulation influencées par la pression (Ar1, Ar2) sur l'élément de soupape (3).

5. Régulateur de pression selon la revendication 4, **caractérisé en ce que** le troisième étranglement (6 ; 6a) est configuré comme un trou avec un troisième diamètre équivalent (d3), qui est agencé dans la partie de siège (2) et qui crée une ouverture d'écoulement entre le volume en amont ($V_u$) et le second volume ($V_2$).

6. Régulateur de pression selon la revendication 4, **caractérisé en ce que** le troisième étranglement (6 ; 6a) est configuré comme un trou avec un troisième diamètre équivalent (d3) qui s'étend entre le premier et le second volume ($V_1$, $V_2$).

7. Régulateur de pression selon la revendication 6, **caractérisé en ce que** le troisième étranglement (6; 6a) est configuré comme une rainure ayant une largeur (B) et une certaine profondeur (H).

8. Régulateur de pression selon l'une quelconque des revendications 4 à 7, **caractérisé en ce que** le premier et le second volume ($V_1$, $V_2$) ainsi que les étranglements (4a, 5a, 6a) sont disposés comme une unité d'étranglement (RU) qui se répète au moins une fois sur le premier côté (2a) de la partie de siège (2).

9. Régulateur de pression selon la revendication 8, **caractérisé en ce que** la partie de siège (2) présente également une seconde face (2b) en face du premier côté (2a), sur lequel un ou plusieurs étranglements (RU) sont disposés.

10. Régulateur de pression selon l'une quelconque des revendications précédentes, **caractérisé en ce que** le régulateur est adapté pour ajuster la pression (p1) de l'écoulement total de fluide d'amortissement (q) entre une première et une deuxième chambre d'amortissement (DC1, DC2) séparées par une partie de séparation (HP) qui se déplace avec une vitesse déterminée par la forme de l'environnement dans une unité d'amortissement

11. Régulateur de pression selon la revendication 10, **caractérisé en ce que** le premier et le second volume ($V_1$, $V_2$) ainsi que les étranglements (4a, 5a, 6a) sont disposés comme une unité d'étranglement (RU) qui se répète au moins une fois sur le premier côté (2a) de la partie de siège (2) et **en ce que** le fluide d'amortissement (q) est capable de s'écouler à travers le régulateur de pression par l'intermédiaire du premier étranglement (RU) dans une direction à partir de la première (DC1) à la seconde chambre amortissement (DC2) et également dans une direction à partir de la deuxième (DC2) à la première chambre d'amortissement (DC1) à travers la deuxième unité d'étranglement (RU).

**12.** Régulateur de pression selon la revendication 11, **caractérisé en ce que** le régulateur de pression est monté directement sur la partie de séparation (HP) de l'amortisseur.

**13.** Régulateur de pression selon la revendication 11, **caractérisé en ce que** le régulateur de pression est disposé dans un espace séparé interconnectée avec les chambres d'amortissement (DC1, DC2).

**14.** Régulateur de pression selon la revendication 4, dans lequel ledit premier volume ($V_1$) communique directement avec le volume en amont ($V_u$), et ledit second volume ($V_2$) communique avec le volume en amont ($V_u$) à travers le troisième étranglement (6; 6a) et le premier volume ($V_1$).

Fig. 1 -Prior art

Fig. 2 -Prior art

*Fig. 3a*

*Fig. 3c*

*Fig. 3b*

*Fig. 3d*

*Fig. 4*

*Fig. 5*

Fig. 6a      Fig. 6b

Fig. 6c      Fig. 6d

*Fig. 6e*

*Fig. 7*

23

*Fig. 8a*

*Fig. 8b*

*Fig. 9*

*Fig. 10a*

*Fig. 10b*

Fig. 11

*Fig. 12*

Fig. 13

EP 2 422 109 B1

**EP 2 422 109 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0942195 A